# EUROPÄISCHE PATENTANMELDUNG

(11) **EP 1 065 598 A1**
(43) Veröffentlichungstag der Anmeldung: **03.01.2001**
(21) Anmeldenummer: 99112171.6
(22) Anmeldetag: 24.06.1999
(51) Int. Cl.: G06F 12/14, G07F 7/10

(54) **Verfahren zum Zugriff auf einen Speicher und Speichereinrichtung hierfür**

(71) Anmelder: SIEMENS AKTIENGESELLSCHAFT, 80333 München (DE)
(72) Erfinder: Fibranz, Heiko, 81373 München (DE); Brücklmayr, Franz-Josef, 86916 Kaufering (DE); Reiner, Robert, 85579 Neubiberg (DE); Allinger, Robert, 82008 Unterhaching (DE); Klosa, Klaus, 80337 München (DE); Hollfelder, Robert, 81827 München (DE); Kargl, Walter, 8020 Graz (AT)

(57) **Zusammenfassung**

Um die Zugriffszeit und somit auch die gesamte Datenverarbeitungszeit zu verkürzen, wird die Sektorgröße der Speichervorrichtung an die Anwendungen angepasst und zwar dadurch daß jeder Anwendung ein Sektor (S1,S2) zugeordnet ist, der aus einer beliebigen Anzahl von Zeilen (Z1,Z2,...) besteht, denen alle eine gemeinsame Linknummer (Link) zugeordnet ist. Es wird daher für jede Anwendung nur einmal das Zugriffsrecht mit einem Schlüssel (A,B,C) geprüft.

## Beschreibung

Die Erfindung betrifft ein Verfahren zum Zugriff auf einen Speicher mit Sektoren, wobei mehrere Zeilen einen Sektor bilden und wobei mehrere Schlüssel vorgesehen sind.

Die Erfindung betrifft weiter eine Speichereinrichtung mit einem Speicher, der mehrere Sektoren und mehrere Schlüssel aufweist.

Kredit-, Telefon-, Versicherungs- oder Ausweiskarten, um nur einige Beispiele einer Vielzahl sogenannter maschinenlesbarer Chipkarten zu nennen, sind mit einem Datenspeicher ausgerüstet, in dem teilweise hochsensible Daten gespeichert sind, die vor unberechtigtem Zugriff zu schützen sind. Zum Schutz hochsensibler Daten sind auf der Chipkarte meist mehrere Schlüssel abgelegt. Vor einer Bearbeitung der im Speicher der Chipkarte gespeicherten Daten, zum Beispiel Lesen, Schreiben, Löschen, Ändern, wird sowohl auf der Chipkarte als auch im Schreib/Lesegerät durch eine Rechenoperation festgestellt, ob das Schreib/Lesegerät hierzu berechtigt ist. So sind zum Beispiel Schlüssel vorgesehen, die nur zum Lesen, zum Lesen und Schreiben von Daten oder zum Abbuchen, Auf- und Abbuchen von Werten berechtigen.

Der Speicher einer Chipkarte gemäß dem Stand der Technik ist in Sektoren gleicher Größe aufgeteilt, wobei jedem Sektor zwei Schlüssel zugeteilt sind. Häufig benötigen Anwendungen aber mehr als einen Sektor, so dass jedem Sektor, der zu einer Anwendung gehört, auch mindestens ein Schlüssel zugeordnet sein muss.

Weil in solchen Fällen deshalb bei der Bearbeitung der Daten, die innerhalb einer Anwendung stehen, für jeden Sektor das Zugriffsrecht erneut geprüft wird, wird die Datenverarbeitungszeit nachteiligerweise erhöht.

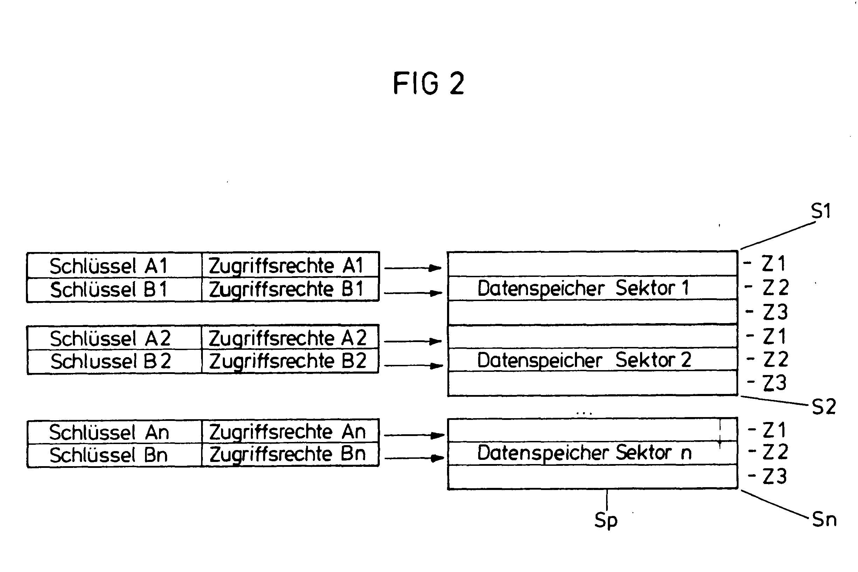

In der Fig. 2 ist ein bekannter Speicher SP nach dem Stand der Technik mit n Sektoren S1 bis Sn gezeigt; jeder der Sektoren S1 bis Sn besteht aus drei Zeilen Z1 bis Z3. Jedem Sektor sind ein oder mehrere Schlüssel A1, B1 bis An, Bn zugeordnet; jeder Schlüssel berechtigt zu einem Zugriffsrecht.

Wenn zum Beispiel die Sektoren S1 und S2 eine Anwendung beinhalten, beispielsweise Abbuchungen von einem Konto, so sind dem Sektor S2 die gleichen Schlüssel zugeordnet wie dem Sektor S1. Jedesmal wenn von einem Sektor auf den anderen, also vom Sektor S1 auf den Sektor S2 oder umgekehrt, zugegriffen wird, erfolgt erneut eine Prüfung des Zugriffsrechts, wodurch die Zugriffszeit und somit die gesamte Datenverarbeitungszeit vergrößert wird. Weil bei kleineren Anwendungen die Sektoren nicht immer voll ausgenutzt werden, werden vorhandene Speicherplätze nicht genutzt, die daher eigentlich überflüssig sind.

Es ist daher Aufgabe der Erfindung, ein Verfahren zum Zugriff auf einen Speicher so zu gestalten, dass die Datenverarbeitungszeit wesentlich verkürzt und die Ausnutzung des Speichers optimal wird. Eine weitere Aufgabe ist, eine Speichereinrichtung hierfür anzugeben.

Die Erfindung löst diese Aufgabe verfahrensgemäß dadurch, dass je Anwendung ein, gegebenenfalls auch mehrere Sektoren mit variabler Sektorgröße vorgesehen ist bzw. sind.

Die Erfindung löst diese Aufgabe vorrichtungsmäßig dadurch, dass jeder der Sektoren eine anwendungsspezifische Größe aufweist, dass jeder Sektor mit einem anwendungsspezifischen Code vesehen ist und dass jeder Schlüssel ebenfalls mit einem Code versehen ist, der den Schlüssel nur zum Zugriff auf einen durch den entsprechenden anwendungsspezifischen Code bestimmten Sektor berechtigt.

Eine zweite Lösung dieser Aufgabe sieht vor, dass einer Zeile ein oder mehrere Zugriffsrechte und ein oder mehrere Verknüpfungen zugeordnet sind, über die der Zeile ein oder mehrere Schlüssel zugeordnet sein können, dass Zeilen mit und ohne Schlüssel vorgesehen sind und dass alle Zeilen mit der gleichen Verknüpfung einen virtuellen Sektor bilden.

Im Gegensatz zu der bekannten Speicherorganisation auf einer Chipkarte ist gemäß der Erfindung die Größe der Sektoren nicht gleich, sondern an die jeweilige Anwendung anpassbar.

In einer Ausführungsform der Erfindung ist ein Speicher in mehrere Sektoren aufgeteilt, die aus einzelnen Zeilen aufgebaut sind. Die Anzahl der Zeilen eines Sektors ist in Abhängigkeit von der Anwendung gewählt. Jeder Zeile ist mindestens eine Zeilenlinknummer zugeordnet. Zeilen, welche zu derselben Anwendung gehören, haben dieselbe Zeilenlinknummer. Um den Zugriff nach Zugriffsrechten zu organisieren, sind mehrere Schlüssel vorgesehen. Ähnlich wie jeder Zeile eine Zeilenlinknummer zugeordnet ist, ist jedem Schlüssel eine Schlüssellinknummer zugeordnet. Die Schlüssellinknummer eines Schlüssels stimmt mit der Zeilenlinknummer derjenigen Zeile bzw. Zeilen überein, die dem Schlüssel zugeordnet ist bzw. sind. Ein Schlüssel hat nur Zugriff auf diejenigen Zeilen, deren Zeilenlinknummer mit seiner Schlüssellinknummer übereinstimmt.

Durch die Maßnahme, die Sektorengröße an die jeweilige Anwendung anzupassen, ist für jede Anwendung und somit für jeden Sektor nur ein Schlüssel erforderlich, während beim Stand der Technik jedem Sektor derselben Anwendung ein Schlüssel zugeordnet ist. Bei der Erfindung wird daher bei der Ausführung jeder Anwendung nur einmal das Zugriffsrecht geprüft, während es beim Stand der Technik bei jedem Sektor erneut geprüft wird. Das erfindungsgemäße Verfahren erzielt deshalb eine Beschleunigung der Datenverarbeitung und nutzt den Speicher optimal aus.

Ein drittes Ausführungsbeispiel der Erfindung sieht vor, dass eine Signatur für jede Einheit vorgesehen ist, die aus Schlüssel, Schlüssellinknummer und zugehörendem Zugriffsrecht besteht. Diese Signaturen werden im Speicher SP abgelegt und beim Authentisieren geprüft.

Ein weiteres Ausführungsbeispiel sieht vor, Zeilen gleicher Zeilenlinknummern eine Signatur zuzuordnen, die ebenfalls im Speicher SP abgelegt ist und bei jedem Zugriff geprüft wird.

Die Signaturen können zum Beispiel neben weiteren Daten die Seriennummer des Chips enthalten.

Um einzelnen Zeilen eines Sektors unterschiedliche Zugriffsberechtigungen zu geben, ist vorgesehen, einer Zeile mehrere Zeilenlinknummern zuzuorden. Jeder Schlüssel, dessen Schlüssellinknummer mit einer der Nummern einer Zeile übereinstimmt, hat daher Zugriff auf diese Zeile.

Der anwendungsspezifische Code eines Sektors entspricht der Link-No. des Sektors bzw. dessen Zeilen. Ähnlich entspricht der Schlüsselcode der Schlüssellinknummer. Ein Schlüssel erlaubt daher nur Zugriff auf einen Sektor, dessen anwendungsspezifischer Code dem Code des Schlüssels zugeordnet ist.

Bei einem weiteren Ausführungsbeispiel ist eine Signatur für jede Einheit vorgesehen, die aus Schlüssel, Code des Schlüssels und zugehörendem Zugriffsrecht besteht. Diese Signaturen werden im Speicher abgelegt und beim Authentisieren geprüft.

Gemäß einem weiteren Ausführungsbeispiel der Erfindung ist jedem Sektor eine Signatur zugeordnet, die ebenfalls im Speicher abgelegt ist und bei jedem Zugriff geprüft wird.

Weitere Ausführungsbeispiele der Erfindung beinhalten die im Folgenden angeführten Maßnahmen.

Für Zeilen gleicher Zeilenlinknummern oder für Sektoren ist eine Signatur im Speicher abgelegt, die bei jedem Datenzugriff geprüft wird.

Wie bereits an früherer Stelle erwähnt wurde, können die Signaturen zum Beispiel neben weiteren Daten die Seriennummer des Chips enthalten.

Einer Schlüssellinknummer oder einer Zeilenlinknummer können ein oder mehrere Zugriffsrechte zugeordnet sein. Auf ähnliche Weise können einem Schlüsselcode oder einem Sektorcode ein oder mehrere Zugriffsrechte zugeordnet sein. Der Schlüsselcode eines Schlüssels erlaubt nur Zugriff auf Sektoren mit einem korrespondierenden Sektorcode.

Einer Zeile können auch mehrere Zeilenlinknummern zugeordnet sein.

Weitere Ausführungsbeispiele bzw. Ausgestaltungen der Erfindung sehen die folgenden Maßnahmen vor.

Eine erfolgreiche Authentisierung mit einem Schlüssel erlaubt alle Zugriffe gemäß der den Schlüssellinknummern bzw. den Schlüsselcodes zugeordneten Zugriffsrechten. Ein Zugriff gemäß Zugriffsrecht auf einen Sektor oder eine Zeile ist nur dann möglich, wenn einer der Sektorcodes oder eine der Zeilenlinknummern mit einer der Schlüssellinknummern oder Schlüsselcodes der Schlüssel korrespondiert, die erfolgreich authentisiert worden sind. Auf ähnliche Weise ist ein Zugriff gemäß Zugriffsrecht auf einen Sektor bzw. eine Zeile nur dann möglich, wenn alle Schlüssel, deren Schlüssellinknummern oder Schlüsselcodes mit der den jeweiligen Zugriffsrechten zugeordneten Zeilenlinknummern oder Sektorcodes korrespondieren, erfolgreich authentisiert worden sind.

Weiter kann vorgesehen sein, die Schlüssel in Zeilen oder Sektoren anzuordnen, welche durch Zugriffsrechte verwaltet werden. Beispielsweise kann ein Leserecht erforderlich sein, um eine Authentisierung mit einem Schlüssel zu erlauben. Es ist auch möglich, ein besonderes Recht für Authentisierung vorzusehen, um eine Authentisierung mit einem Schlüssel zu erlauben. Dies schließt jedoch nicht aus, dass auch Zeilen oder Sektoren vorgesehen sein können, die für bestimmte Zugriffsarten keine Authentisierung benötigen.

Analog zur Authentisierung kann zum freien Zugriff ein besonderes Zugriffsrecht vorgesehen sein. Ein freier Zugriff kann über eine besondere Zeilenlinknummer oder einen besonderen Sektorcode geregelt sein. Schließlich kann auch ein besonderer Schlüssel vorgesehen sein, um einen freien Zugriff zu regeln.

Anhand der Zeichnungen werden nun Ausführungsbeispiele einer erfindungsgemäßen Speicherorganisation beschrieben und erläutert.

Es zeigen:
- Fig. 1: eine beispielhafte Speicherorganisation gemäß der Erfindung,
- Fig. 2: die Speicherorganisation gemäß dem Stand der Technik,
- Fig. 3: eine beispielhafte Speicherorganisation gemäß Anspruch 2.

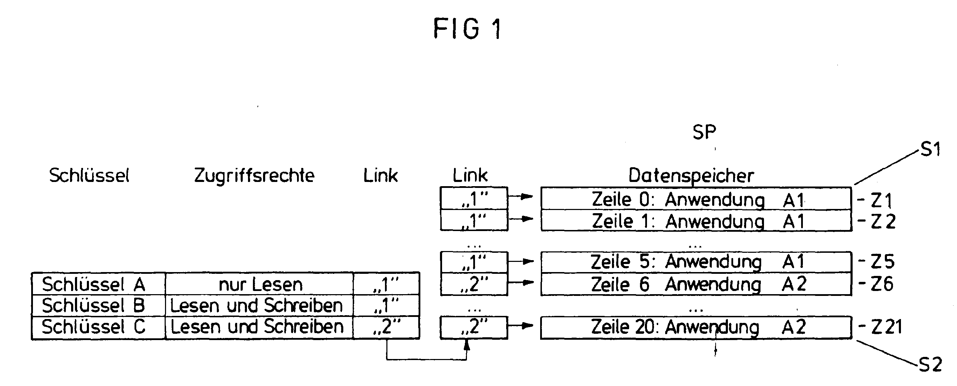

In der Fig. 1 ist beispielhaft eine erfindungsgemäße Speicherorganisation dargestellt, bei der zwei Anwendungen, eine Anwendung A1, die zum Beispiel das Abbuchen von Werten betrifft, und eine Anwendung A2, die zum Beispiel das Aufbuchen von Werten betrifft auf der Chipkarte integriert sind. Die Anwendung A1 benötigt sechs Zeilen Z1 bis Z6, die zu einem Sektor S1 zusammengefasst sind, während die Anwendung A2 15 Zeilen Z7 bis Z21 benötigt, die zu einem Sektor S2 zusammengefasst sind. Es sind drei Schlüssel A, B, C vorgesehen. Der Schlüssel A berechtigt nur zum Lesen; die Schlüssel B und C berechtigen zum Lesen und Schreiben. Der Schlüssel A und der Schlüssel B gehören zur Anwendung A1; sie haben beide die Schlüssellinknummer 1. Die Zeilen des Sektors S1 haben alle die gleiche Nummer nämlich 1, die mit der Schlüssellinknummer des Schlüssels A und des Schlüssels B übereinstimmt. Alle Zeilen des Sektors S2 haben die Nummer 2, die dem Schlüssel C zugeordnet ist. Mit dem Schlüssel A können daher alle Zeilen mit der Zeilenlinknummer 1 gelesen werden. Mit dem Schlüssel B können alle Zeilen mit der Nummer 1 gelesen und auch beschrieben werden. Mit dem Schlüssel C können alle Zeilen mit der Zeilenlinknummer 2 gelesen und beschrieben werden. Dagegen kann mit den Schlüsseln A und B nicht auf die Zeilen mit der Zeilenlinknummer 2 zugegriffen werden. Ebenso kann mit dem Schlüssel C nicht auf die Zeilen mit der Zeilenlinknummer 1 zugegriffen werden.

Durch die erfindungsgemäße Maßnahme, die Sektorengröße an die einzelnen Anwendungen anzupassen, ist nur eine Prüfung des Zugriffsrechts je Anwendung erforderlich, während, wie bereits erwähnt, beim Stand der Technik soviele Prüfungen erforderlich sind, wie eine Anwendung Sektoren belegt.

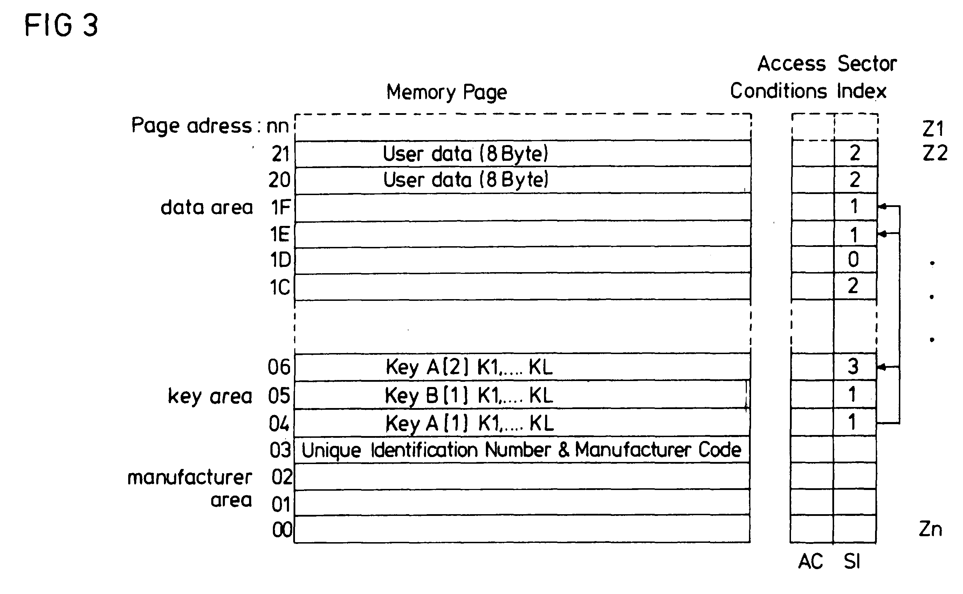

Es wird nun ein Ausführungsbeispiel des Verfahrens, das in der Fig. 3 gezeigt ist, beschrieben und erläutert.

Die in der Fig. 3 abgebildete Speicherkonfiguration ist weitgehend flexibel gestaltet. Der Speicher ist in n Zeilen zu beispielsweise je acht Byte unterteilt, die zunächst keinem Segment zugeordnet sind. Jede dieser Zeilen besitzt jedoch ein zusätzliches Sektorindexregister SI sowie ein Konfigurationsregister AC, wofür nur zwei Byte zusätzlich benötigt werden. Über den Sektorindex SI werden einer Zeile die zur Authentifizierung nötigen Schlüssel K1 bis Kk zugeordnet. Einer Zeile kann ein Schlüssel oder können auch mehrere Schlüssel zugeordnet sein. Eine bevorzugte Ausgestaltung der Erfindung sieht vor, ein Schlüsselpaar für jede Zeile vorzusehen. Die beiden Schlüssel des Schlüsselpaares können gleichberechtigt oder hierarchisch geordnet sein. Bei hierarischem Schlüsselkonzept können die Zugriffsrechte eines einzelnen Schlüssels im Konfigurationsregister AC der Zeile individuell eingestellt werden. Auch die Schlüssel selbst können wieder über andere Schlüssel oder mit sich selbst authentifiziert und entsprechend den im Konfigurationsregister stehenden Zugriffsrechten gelesen oder geschrieben werden. Alle Zeilen mit gleichem Sektorindex gehören der gleichen Applikation an und bilden einen virtuellen Sektor.

Ein Vorteil dieses Konzeptes liegt darin, dass jeder Applikationsschlüssel unabhängig von der Größe der Applikation nur einmal gespeichert werden muss. Die Größe und Anzahl der Segmente ist frei wählbar. Die Anzahl der definierten Segmente bestimmt die Anzahl der benötigten Schlüsselpaare, so dass der verbleibende Speicherplatz für Applikationsdaten voll zur Verfügung steht.

Die Erfindung ist besonders für den Einsatz auf einer Chipkarte geeignet; sie ist jedch nicht auf diesen einen Anwendungsfall beschränkt, denn sie lässt sich überall dort vorteilhaft einsetzen, wo der Zugriff auf Speicherplätze durch Zugriffsrechte geregelt ist.

## Patentansprüche

1. Verfahren zum Zugriff auf einen Speicher (SP) mit Sektoren (S1, ..., Sm), wobei eine oder mehrere Zeilen (Z1,.., Zn) einen Sektor bilden und wobei mehrere Schlüssel (K1, ..., Kk) vorgesehen sind,
**dadurch gekennzeichnet**, dass je Anwendung ein, gegebenenfalls auch mehrere Sektoren (S1, ..., Sm) mit variabler Sektorgröße vorgesehen ist bzw. sind.

2. Verfahren zum Zugriff auf einen Speicher mit Sektoren (S1, ..., Sm), wobei mehrere Zeilen (Z1, ..., Zn) einen Sektor bilden, wobei mehrere Schlüssel vorgesehen sind,
**dadurch gekennzeichnet**, dass einer Zeile (Z1, ..., Zn) ein oder mehrere Zugriffsrechte (AC) und ein oder mehrere Verknüpfungen (SI) zugeordnet sind, über die der Zeile ein oder mehrere Schlüssel (K1, ..., Kk) zugeordnet sein können, dass Zeilen mit und ohne Schlüssel vorgesehen sind und dass alle Zeilen mit der gleichen Verknüpfung einen virtuellen Sektor bilden.

3. Verfahren nach Anspruch 1,
**dadurch gekennzeichnet**, dass einer Zeile (Z1,..., Zn) mindestens eine Zeilenlinknummer zugeordnet ist, dass Zeilen, welche demselben Sektor zugeordnet sind, die gleiche Zeilenlinknummer tragen, dass jedem Schlüssel (K1, ..., Kk) eine Schlüssellinknummer zugeordnet ist, dass die Schlüssellinknummer eines Schlüssels mit der Zeilenlinknummer derjenigen Zeile bzw. Zeilen übereinstimmt, deren Sektor dem Schlüssel zugeordnet ist bzw. sind, und dass ein Schlüssel nur Zugriff auf diejenigen Zeilen erlaubt, deren Zeilenlinknummer mit der Schlüssellinknummer übereinstimmt.

4. Verfahren nach Anspruch 3,
**dadurch gekennzeichnet**, dass einer Schlüssellinknummer ein oder mehrere Zugriffsrechte zugeordnet sind.

5. Verfahren nach Anspruch 3 oder 4,
**dadurch gekennzeichnet**, dass einer Zeilenlinknummer ein oder mehrere Zugriffsrechte zugeordnet sind.

6. Verfahren nach einem der Ansprüche 1 bis 5,
**dadurch gekennzeichnet**, dass einem Sektor mindestens ein anwendungsspezifischer Sektorcode zugeordnet ist.

7. Verfahren nach Anspruch 6,
**dadurch gekennzeichnet**, dass einem Schlüssel mindestens ein Schlüsselcode zugeordnet ist, der nur Zugriff auf Sektoren mit einem korrespondierenden Sektorcode erlaubt.

8. Verfahren nach Anspruch 7,
**dadurch gekennzeichnet**, dass einem Schlüsselcode ein oder mehrere Zugriffsrechte zugeordnet sind.

9. Verfahren nach Anspruch 7 oder 8,
**dadurch gekennzeichnet**, dass einem Sektorcode ein oder mehrere Zugriffsrechte zugeordnet sind.

10. Verfahren nach Anspruch 3 oder 4,
**dadurch gekennzeichnet**, dass zum Schutz vor Manipulationen für jede Einheit gebildet aus Schlüssel, Schlüssellinknummer und zugehörendem Zugriffsrecht eine Signatur im Speicher (SP) abgelegt ist, die beim Authentisieren geprüft wird.

11. Verfahren nach Anspruch 7 oder 8,
**dadurch gekennzeichnet**, dass zum Schutz vor Manipulationen für jede Einheit gebildet aus Schlüssel, Schlüsselcode und zugehörendem Zugriffsrecht eine Signatur im Speicher (SP) abgelegt ist, die beim Authentisieren geprüft wird.

12. Verfahren nach Anspruch 3 oder 5,
**dadurch gekennzeichnet**, dass für Zeilen gleicher Zeilenlinknummer eine Signatur im Speicher (SP) abgelegt ist, die bei jedem Datenzugriff geprüft wird.

13. Verfahren nach einem der Ansprüche 1 bis 12,
**dadurch gekennzeichnet**, dass für jeden Sektor eine Signatur im Speicher (SP) abgelegt ist, die bei jedem Datenzugriff geprüft wird.

14. Verfahren nach Anspruch 10, 11, 12 oder 13,
**dadurch gekennzeichnet**, dass die Signatur die Seriennummer des sie tragenden Chips enthält.

15. Verfahren nach einem der vorangehenden Ansprüche 3 bis 14,
**dadurch gekennzeichnet**, dass einer Zeile mehrere Zeilenlinknummern zugeordnet sind.

16. Verfahren nach Anspruch 10 oder 11,
**dadurch gekennzeichnet**, dass eine erfolgreiche Authentisierung mit einem Schlüssel alle Zugriffe gemäß der den Schlüssellinknummern bzw. den Schlüsselcodes zugeordneten Zugriffsrechten erlaubt.

17. Verfahren nach Anspruch 10 oder 11,
**dadurch gekennzeichnet**, dass ein Zugriff gemäß Zugriffsrecht auf einen Sektor bzw. eine Zeile nur dann möglich ist, wenn einer der Sektorcodes bzw. eine der Zeilenlinknummern mit einer der Schlüssellinknummern oder Schlüsselcodes der Schlüssel korrespondiert, die erfolgreich authentisiert worden sind.

18. Verfahren nach Anspruch 10 oder 11,
**dadurch gekennzeichnet**, dass ein Zugriff gemäß Zugriffsrecht auf einen Sektor bzw. eine Zeile nur dann möglich ist, wenn alle Schlüssel, deren Schlüssellinknummern oder Schlüsselcodes mit der den jeweiligen Zugriffsrechten zugeordneten Zeilenlinknummern oder Sektorcodes korrespondieren, erfolgreich authentisiert worden sind.

19. Verfahren nach einem der Ansprüche 1 bis 18,
**dadurch gekennzeichnet**, dass die Schlüssel in Zeilen oder Sektoren angeordnet sind, welche durch Zugriffsrechte verwaltet werden.

20. Verfahren nach Anspruch 19,
**dadurch gekennzeichnet**, dass ein Leserecht erforderlich ist, um eine Authentisierung mit einem Schlüssel zu erlauben.

21. Verfahren nach Anspruch 19,
**dadurch gekennzeichnet**, dass ein besonderes Recht für Authentisierung erforderlich ist, um eine Authentisierung mit einem Schlüssel zu erlauben.

22. Verfahren nach einem der Ansprüche 1 bis 21,
**dadurch gekennzeichnet**, dass Zeilen oder Sektoren vorgesehen sind, die für bestimmte Zugriffsarten keine Authentisierung benötigen.

23. Verfahren nach Anspruch 22,
**dadurch gekennzeichnet**, dass zum freien Zugriff ein besonderes Zugriffsrecht erforderlich ist.

24. Verfahren nach Anspruch 22,
**dadurch gekennzeichnet**, dass ein freier Zugriff über eine besondere Zeilenlinknummer oder einen besonderen Sektorcode möglich ist.

25. Verfahren nach Anspruch 22,
**dadurch gekennzeichnet**, dass ein freier Zugriff mittels eines besonderen Schlüssels geregelt wird.

26. Verfahren nach Anspruch 2,
**dadurch gekennzeichnet**, dass den Zeilen mit Schlüsseln ein Schlüsselpaar zugeordnet ist.

27. Verfahren nach Anspruch 26,
**dadurch gekennzeichnet**, dass die Schlüssel des Schlüsselpaares gleichberechtigt sind.

28. Verfahren nach Anspruch 26,
**dadurch gekennzeichnet**, dass die Schlüssel des Schlüsselpaares hierarisch geordnet sind.

29. Verfahren nach einem der Ansprüche 2, 26, 27 oder 28,
**dadurch gekennzeichnet**, dass die Schlüssel mit sich selbst oder über andere Schlüssel authentifiziert sind.

30. Speichereinrichtung mit einem Speicher, der mehrere Sektoren (S1, ..., Sm) aufweist, und mit mehreren Schlüsseln (K1, ..., Kk),
**dadurch gekennzeichnet**, dass jeder der Sektoren (S1, ..., Sm) eine anwendungsspezifische Größe aufweist, dass jeder Sektor (S1, ..., Sm) mit einem anwendungsspezifischen Code versehen ist, und dass jeder Schlüssel (K1, ..., Kk) ebenfalls mit einem Code versehen ist, der den Schlüssel nur zum Zugriff auf einen durch den entsprechenden anwendungsspezifischen Code bestimmten Sektor (S1, ..., Sm) berechtigt.

31. Speichereinrichtung nach Anspruch 30,
**dadurch gekennzeichnet**, dass zum Schutz vor Manipulationen für jede Einheit gebildet aus Schlüssel, Code des Schlüssels und zugehörendem Zugriffsrecht eine Signatur im Speicher abgelegt ist, die beim Authentisieren geprüft wird.

32. Speichereinrichtung nach Anspruch 30 oder 31,
**dadurch gekennzeichnet**, dass für jeden Sektor eine Signatur im Speicher abgelegt ist, die bei jedem Datenzugriff geprüft wird.

33. Speichereinrichtung nach Anspruch 30, 31 oder 32
**dadurch gekennzeichnet**, dass die Signatur die Seriennummer des sie tragenden Chips enthält.

34. Speichereinrichtung nach Anspruch 30, 31, 32 oder 33,
**dadurch gekennzeichnet**, dass die Schlüssel in Zeilen und Sektoren angeordnet sind.
